# EUROPÄISCHE PATENTSCHRIFT

(11) **EP 2 385 268 B1**
(45) Veröffentlichungstag und Bekanntmachung des Hinweises auf die Patenterteilung: **13.03.2013**
(21) Anmeldenummer: 11164754.1
(22) Anmeldetag: 04.05.2011
(51) Int. Cl.: F16D 65/14

(54) **Im Bremssattel einer Scheibenbremse angeordnete Zuspanneinrichtung**
Adjusting unit in the brake calliper for a disc brake
Dispositif de serrage agencé dans le disque de serrage d'un frein à disque

(30) Priorität: 05.05.2010 DE 102010019471
(43) Veröffentlichungstag der Anmeldung: 09.11.2011
(73) Patentinhaber: KNORR-BREMSE Systeme für Nutzfahrzeuge GmbH, 80809 München (DE)
(72) Erfinder: Brandl, Christian, 94447 Plattling (DE)
(74) Vertreter: Mattusch, Gundula

(56) Entgegenhaltungen:
- EP-B1- 1 599 680
- WO-A1-2006/024512

## Beschreibung

Die Erfindung betrifft eine im Bremssattel einer Scheibenbremse für ein Fahrzeug, insbesondere ein Nutzfahrzeug, angeordnete Zuspanneinrichtung nach dem Oberbegriff des Anspruchs 1.

Bei einer solchen, vorzugsweise druckluft- oder elektromechanisch betätigbaren und vor allem in Nutzfahrzeuge einbaubaren Scheibenbremse weist die Zuspanneinrichtung einen Hebel, zumindest eine daran befestigte Lagerschale und eine Wälzrolle auf, die parallel zu einer Bremsscheibe verläuft und eine Schwenkachse für den Hebel bildet, wobei die Wälzrolle in der Lagerschale einliegt.

Zur axialen und radialen Sicherung der Wälzrolle ist in der EP 1 599 680 B1 ein Halter vorgeschlagen, der an den beiden Stirnseiten der Wälzrolle anliegt und mit dem Hebel durch Warmvernieten verbunden ist.

Dabei ist dieser aus Blech bestehende Halter mit angeformten Käfigrückführungen versehen.

Aus Festigkeitsgründen ist der Halter wärmebehandelt, wodurch es beim Herstellungsprozess ebenso zu einem Verzug kommen kann, wie durch die funktionsbedingt geometrisch ungünstige Kontur des Käfigrückführungsbleches.

Naturgemäß ergeben sich dadurch erhebliche fertigungstechnische Nachteile, die einer stets angestrebten Kostenoptimierung entgegenstehen.

Durch den genannten Verzug des Formteiles ist die Ausschussquote relativ hoch bzw. sind kostenintensive Nacharbeiten erforderlich.

Im Übrigen steht der Halter aufgrund seines sozusagen Multifunktionscharakters einer gewichtsoptimierten Gestaltung entgegen, wie sie im Fahrzeugbau ständig gefordert wird.

In der WO 2006/024512 A1 ist eine Zuspanneinrichtung gemäß der Gattung geoffenbart, bei der die Käfigrückführungen als Bestandteil einer Lagerschale durch Vernieten mit dem Bremshebel verbunden sind. Zur Sicherung der Wälzrolle ist ein Sicherungsmittel in Form einer Klammer oder eines Sicherungsstiftes vorgesehen, die oder der in eine Nut der Wälzrolle eingreift.

Der Erfindung liegt die Aufgabe zugrunde, eine Zuspanneinrichtung der gattungsgemäßen Art so weiterzuentwickeln, dass sie konstruktiv einfacher aufgebaut, kostengünstiger herstellbar sowie gewichtsoptimiert ist.

Diese Aufgabe wird durch eine Zuspanneinrichtung mit den Merkmalen des Anspruchs 1 gelöst.

Die in diesem Sinn ausgebildete Zuspanneinrichtung bietet gegenüber der bisher bekannten und eingesetzten wesentliche Vorteile.

So ist zunächst einmal hervorzuheben, dass durch die jeweils separate Ausbildung der Käfigrückführungen eine derart quasi filigrane Formgebung möglich ist, dass ein Verzug durch die notwendige Wärmebehandlung vermieden wird.

Darüber hinaus ermöglicht die Erfindung eine Gewichtsoptimierung der Käfigrückführungen bzw. der Halterung zur radialen und axialen Sicherung der Wälzrolle, da sich der Materialeinsatz nur noch auf das tatsächlich Notwendige beschränkt und überdies ausschließlich von den vorherrschenden Belastungsverhältnissen abhängig ist.

Die Lagerschale wird zweckmäßigerweise durch die Käfigrückführungen eingeklemmt, die im Übrigen mit dem Hebel durch Vernieten verbunden sind.

Zum Formschluss zwischen der Wälzrolle und der jeweiligen Käfigrückführung ist diese bügelartig geformt und greift dabei in eine Vertiefung der Mantelfläche der Wälzrolle, vorzugsweise eine umlaufende Nut, ein.

Zur Gewichtseinsparung, die sich aus der Erfindung ergibt, zählt auch der Verzicht auf stirnseitige Zapfen der Wälzrolle, an die der aus dem genannten Stand der Technik bekannte Halter angreift.

Nach einer vorteilhaften Weiterbildung der Erfindung sind die Käfigrückführungen identisch ausgebildet, was ebenfalls zur Reduzierung der Herstellungskosten beiträgt.

Die Gestaltung der Käfigrückführungen ermöglicht eine Vergrößerung der Auflagefläche und korrespondierend damit einer Brücke, in der Stellspindeln gelagert sind, mittels derer ein Bremsbelag gegen eine Bremsscheibe pressbar ist. Daraus ergibt sich weiter, dass Gussradien an der als Gussteil ausgebildeten Brücke größer dimensioniert werden können, mit der Folge einer Festigkeitserhöhung der Brücke, die letztendlich gleichfalls zu einer Gewichtsoptimierung beiträgt, da die Brücke bei gleichbleibender Belastung in ihrer Dimensionierung kleiner ausgebildet werden kann.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: den schematischen Aufbau einer Scheibenbremse in einem Querschnitt
- Figur 2: einen Teil der Scheibenbremse in einer perspektivischen Ansicht
- Figur 3: einen Ausschnitt des Teils gemäß der Figur 2 in einer Seitenansicht
- Figur 4: eine Einzelheit der Scheibenbremse in einer perspektivischen Ansicht.

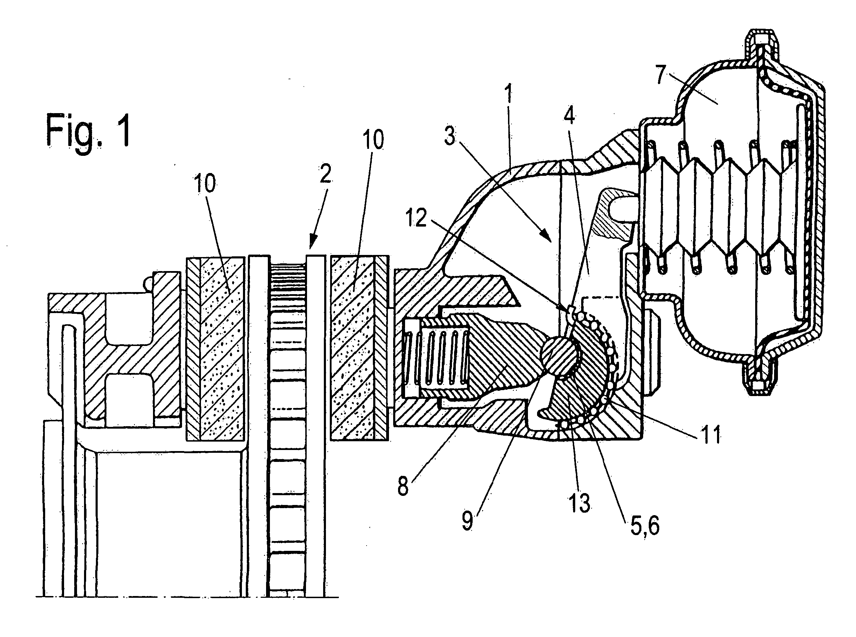

In der Figur 1 ist in schematischer Darstellung eine Scheibenbremse für ein Fahrzeug, insbesondere ein Nutzfahrzeug, in einem Halbschnitt dargestellt, die eine Bremsscheibe 2 aufweist, die an einer nicht gezeigten Achse des Nutzfahrzeuges befestigt ist und von einem Bremssattel 1 umfasst ist, der in Richtung der Bremsscheibe 2 verschiebbar sein kann.

Im Bremssattel 1 ist eine Zuspanneinrichtung 3 angeordnet, mit der bei einer über einen vorzugsweise pneumatisch betätigten Bremszylinder 7 ausgelösten Bremsung Bremsbeläge 10 an die Bremsscheibe 2 drückbar sind.

Hierzu greift die Zuspanneinrichtung 3 an zwei nicht dargestellte, parallel und mit Abstand zueinander in einer Brücke 8 angeordnete Stellspindeln an.

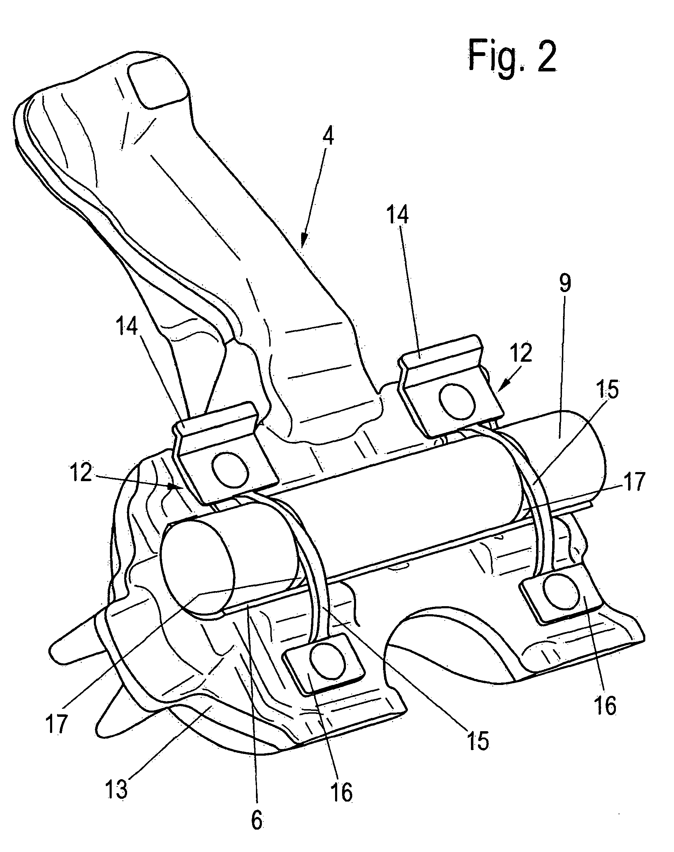

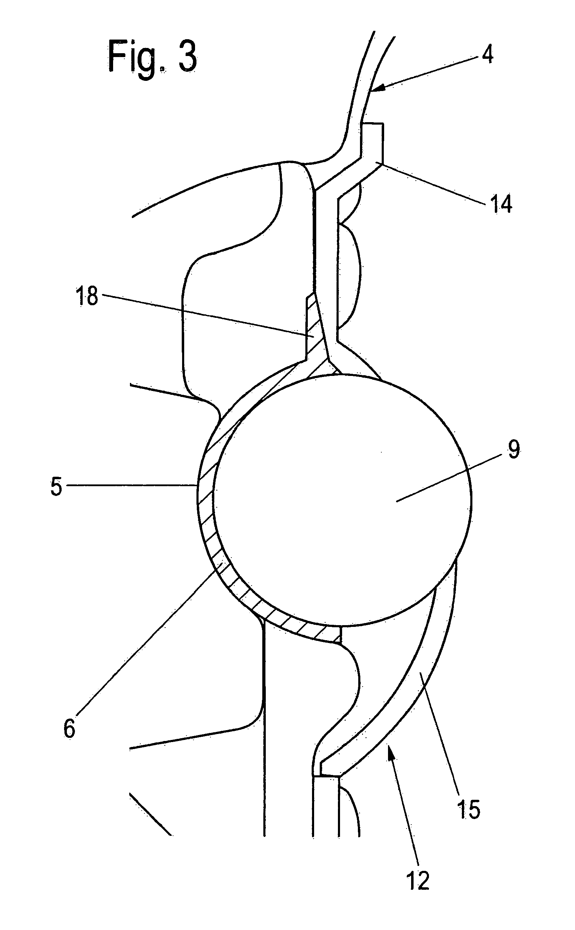

Die Zuspanneinrichtung 3 weist einen in den Figuren 2 und 3 als Einzelheit gezeigten Hebel 4 auf, der mit dem Bremszylinder 7 in Wirkverbindung steht und bei dessen Betätigung in Richtung der Bremsscheibe 1 schwenkbar um eine Wälzrolle 9 ist, die parallel zur Ebene der Bremsscheibe 2 verläuft und in der Brücke 8 gelagert ist.

Im Bremssattel 1 sind Wälzlager 11 vorgesehen, mit jeweils in einem Käfig gehaltenen Wälzkörpern, die sich an dem in diesem Bereich als Exzenter 13 ausgebildeten Hebel 4 abstützen. Die Wälzrolle 9 ist am Hebel 4 axial und radial gesichert gehalten.

Dabei stützt sich die Wälzrolle 9 andererseits an einer Lagerschale 6 ab, die in einer im Exzenter 13, dem Wälzlager 11 gegenüberliegend, eingebrachten konkaven Kehle 5 einliegt.

Um die Wälzlager 11 nach einer Zurückschwenkung des Hebels 4 in eine Ausgangsstellung zurückzuführen, ist jedem Wälzlager 11 zugeordnet eine Käfigrückführung 12, erfindungsgemäß jeweils als separate Formteile ausgebildet, am Hebel 4 befestigt, vorzugsweise vernietet, was besonders deutlich in der Figur 2 zu erkennen ist.

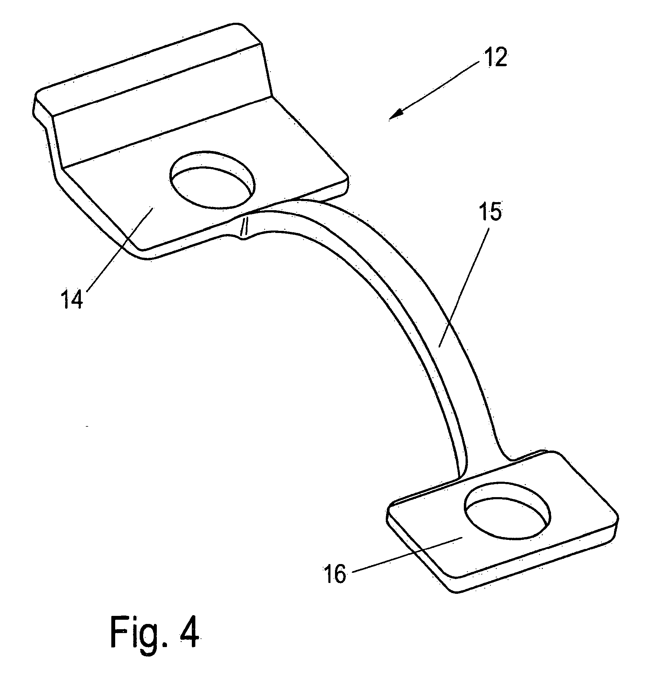

In der Figur 4 ist erkennbar, dass die Käfigrückführung aus einer Winkellasche 14, einer Lasche 16 sowie einem beide miteinander verbindenden bogenförmigen Steg 15 besteht, wobei die Winkellasche 14 einen Anschlag für den Käfig des Wälzlagers 11 bildet und damit der eigentlichen Käfigrückführung dient, aber ebenso wie die Lasche 16 als Verbindungselement mit dem Hebel 4, wobei jeweils eine Bohrung zur Durchführung des Niets vorgesehen ist.

Die radiale und axiale Sicherung der Wälzrolle 9 erfolgt durch formschlüssigen Eingriff der Käfigrückführungen 12, wozu die Wälzrolle 9 umlaufende Nuten 17 aufweist, in denen die in ihren Querschnittsabmaßen daran angepassten Stege 15 einliegen.

In der Figur 3 ist erkennbar, dass die Lagerschale 6 einen abgewinkelten Schenkel 18 aufweist, auf dem die Winkellasche 14 fest aufliegt, so dass die Lagerschale 6 klemmend gesichert gehalten ist.

### Bezugszeichenliste

- 1: Bremssattel
- 2: Bremsscheibe
- 3: Zuspanneinrichtung
- 4: Hebel
- 5: Kehle
- 6: Lagerschale
- 7: Bremszylinder
- 8: Brücke
- 9: Wälzrolle
- 10: Bremsbelag
- 11: Wälzlager
- 12: Käfigrückführung
- 13: Exzenter
- 14: Winkellasche
- 15: Steg
- 16: Lasche
- 17: Nut
- 18: Schenkel

## Patentansprüche

1. Zuspanneinrichtung (3) für einen Bremssattel (1) einer Scheibenbremse für ein Fahrzeug,
die eine axial und radial gesicherte, sich in einer Lagerschale (6) eines im Abstützbereich mit jeweils in einem Käfig gehaltenen, Wälzkörper aufweisenden Wälzlagern (11) des Bremssattels (1) als Exzenter (13) ausgebildeten schwenkbaren Hebels (4) der Zuspanneinrichtung abstützende Wälzrolle (9) aufweist, wobei an dem Hebel (4) ortsfeste Käfigrückführungen (12) angeordnet sind, **dadurch gekennzeichnet, dass** die Käfigrückführungen (12) aus zwei separaten Formteilen bestehen, die jeweils formschlüssig in die Mantelfläche der Wälzrolle (9) eingreifen.

2. Zuspanneinrichtung nach Anspruch 1, **dadurch gekennzeichnet, dass** die Wälzrolle (9), jeder Käfigrückführung (12) zugeordnet, eine Vertiefung, vorzugsweise eine Nut (17) aufweist, in der ein Steg (15) der Käfigrückführung (12) einliegt.

3. Zuspanneinrichtung nach Anspruch 2, **dadurch gekennzeichnet, dass** an einem Ende des bogenförmigen Steges (15) eine Winkellasche (14) und am anderen Ende eine Lasche (16) angeordnet sind, zur Verbindung der Käfigrückführung (12) mit dem Hebel (4).

4. Zuspanneinrichtung nach einem der vorhergehenden Ansprüche, **dadurch gekennzeichnet, dass** die Käfigrückführungen (12) mit dem Hebel (4) vernietet sind.

5. Zuspanneinrichtung nach Anspruch 3, **dadurch gekennzeichnet, dass** die Lagerschale (6) durch die Winkellasche (14) klemmend gehalten ist.

6. Zuspanneinrichtung nach einem der Ansprüche 3 oder 5, **dadurch gekennzeichnet, dass** die Winkellasche (14) einen Anschlag für den Käfig des Wälzlagers (11) bildet.

7. Zuspanneinrichtung nach einem der vorhergehenden Ansprüche, **dadurch gekennzeichnet, dass** die Käfigrückführungen (12) identisch ausgebildet sind.

8. Zuspanneinrichtung nach einem der vorhergehenden Ansprüche, **dadurch gekennzeichnet, dass** die Käfigrückführungen (12) als Blechformteile ausgebildet sind.

9. Zuspanneinrichtung nach einem der Ansprüche 3, 5 oder 6, **dadurch gekennzeichnet, dass** die Lagerschale (6) einen abgewinkelten Schenkel aufweist, auf dem die Winkellasche (14) unter Pressdruck anliegt.

## Claims

1. Application device (3) for a brake calliper (1) of a disc brake for a vehicle, having an axially and radially secured roller (9) supported in a bearing shell (6) of a pivotable lever (4) of the application device formed in the support region with respective roller bearings (11), comprising rolling bodies held respectively in a cage, as an eccentric element (13), wherein fixed-location cage return guides (12) are arranged on the lever (4), **characterised in that** the cage return guides (12) comprise two separate moulded parts which respectively engage in a positive locking manner in the shell surface of the roller (9).

2. Application device according to claim 1, **characterised in that** the roller (9), assigned to each cage return guide (12), comprises a depression, preferably a groove (17), in which a web element (15) of the cage return guide (12) lies.

3. Application device according to claim 2, **characterised in that** an angled plate element (14) is formed at one end of the arc-form web (15) and a plate element (16) is arranged at the other end for connection of the cage return guide (12) to the lever (4).

4. Application device according to one of the preceding claims, **characterised in that** the cage return guides (12) are riveted to the lever (4).

5. Application device according to claim 3, **characterised in that** the bearing shell (6) is held in a clamping manner by the angled plate element (14).

6. Application device according to one of the preceding claims 3 or 5, **characterised in that** the angled plate element forms a stop for the cage of the roller bearing (11).

7. Application device according to one of the preceding claims, **characterised in that** the cage return guides (12) are formed identically.

8. Application device according to one of the preceding claims, **characterised in that** the cage return guides (12) are formed as sheet metal parts.

9. Application device according to one of the claims 3, 5 or 6, **characterised in that** the bearing shell (6) comprises an angled leg, on which the angled plate element (14) lies under pressing pressure.

## Revendications

1. Dispositif de serrage pour un étrier (1) d'un frein à disque d'un véhicule, qui comprend un rouleau roulant (9) arrêté en sens axial et radial, qui s'appuie dans une coquille de coussinet (6) d'un levier (4) du dispositif de serrage, qui est retenu dans la zone d'appui moyennant des paliers à roulement (11) dudit étrier de frein (1), retenus dans une cage et renfermant des corps de roulement, ledit levier étant conçu sous forme d'un excentrique et étant pivotable, dans lequel des moyens de retour de la cage (12) stationnaires sont agencés audit levier (4), **caractérisé en ce que** lesdits moyens de retour de la cage (12) consistent en deux pièces moulées séparées, dont chacune se trouve en prise de manière positive dans la surface latérale dudit rouleau roulant (9).

2. Dispositif de serrage selon la revendication 1, **caractérisé en ce que** ledit rouleau roulant (9) comprend un évidement, de préférence une rainure (17) dans laquelle se trouve en prise une bride (15) dudit moyen de retour de la cage (12), en affectation à chaque moyen de retour de la cage (12).

3. Dispositif de serrage selon la revendication 2, **caractérisé en ce qu'**à une extrémité de ladite bridge en arc (15) une cornière couvre-joint (14) est disposé pendant qu'une éclisse (16) est agencé à l'autre extrémité, pour la connexion dudit moyen de retour de la cage (12) audit levier (4).

4. Dispositif de serrage selon une quelconque des revendications précédentes, **caractérisé en ce que** lesdits moyens de retour de la cage (12) sont rivetés audit levier (4).

5. Dispositif de serrage selon la revendication 3, **caractérisé en ce que** ladite coquille de coussinet (6) est retenue par serrage moyennant ladite cornière de couvre-joint (14).

6. Dispositif de serrage selon une quelconque des revendications 3 ou 5, **caractérisé en ce que** ladite cornière de couvre-joint (14) constitue une butée pour la cage dudit palier à roulement (11).

7. Dispositif de serrage selon une quelconque des revendications précédentes, **caractérisé en ce que** lesdits moyens de retour de la cage (12) présentent une configuration identique.

8. Dispositif de serrage selon une quelconque des revendications précédentes, **caractérisé en ce que** lesdits moyens de retour de la cage (12) sont conçus sous forme de pièces moulées en tôle.

9. Dispositif de serrage selon une quelconque des revendications 3, 5 ou 6, **caractérisé en ce que** ladite coquille de coussinet (6) présente une branche coudée, sur laquelle s'appuie ladite cornière de couvre-joint (14) sous pression de serrage.
